# EUROPEAN PATENT SPECIFICATION

(11) **EP 2 905 978 B1**
(45) Date of publication and mention of the grant of the patent: **18.01.2017**
(21) Application number: 12886544.1
(22) Date of filing: 15.10.2012
(51) Int. Cl.: H04W 4/24, H04W 24/02, H04L 12/26, H04L 12/24

(54) **METHOD AND DEVICE FOR TRANSMITTING DATA STREAM**
VERFAHREN UND VORRICHTUNG ZUR ÜBERTRAGUNG VON DATENSTRÖMEN
MÉTHODE ET DISPOSITIF DE TRANSMISSION DE FLUX DE DONNÉES

(43) Date of publication of application: 12.08.2015
(73) Proprietor: Huawei Technologies Co., Ltd., Longgang District Shenzhen, Guangdong 518129 (CN)
(72) Inventor: HAN, Guanglin, Shenzhen Guangdong 518129 (CN); XIONG, Chunshan, Shenzhen Guangdong 518129 (CN); ZHANG, Jian, Shenzhen Guangdong 518129 (CN)
(74) Representative: Pfenning, Meinig & Partner mbB
(86) International application number: PCT/CN2012/082970
(87) International publication number: WO 2014/059579

(56) References cited:
- WO-A1-2010/060478
- CN-A- 101 500 277
- CN-A- 102 131 172
- CN-A- 102 137 368
- US-A1- 2012 087 262
- US-A1- 2012 239 816
- US-A1- 2012 246 325

## Description

### TECHNICAL FIELD

The present invention relates to the communications field, and in particular, to a data flow transmission method and a device.

### BACKGROUND

In an existing evolved packet system, on a core network, a policy charging control manner based on a PCRF (Policy and Charging Rules Function, policy and charging rules function) entity is used, and a PDN (Packet Data Network, packet data network) gateway controls, according to a policy provided by the PCRF, data passing through the gateway, including QoS configuration, binding of a transport bearer and a service data flow, and the like. For example, US 2012/0087262 A1 discusses an apparatus, system, method and a computer program product for transmitting to a policy and/or charging function in a PDN-gateway information relating to a user, wherein the information includes an indication of a service data detecting entity for detecting service data of a packet data connection of the user, and initiating communication towards the service data detecting entity based on the received information.

However, in the prior art, a device (for example, a base station) on an access network side is only responsible for receiving data, and performs scheduling according to a current status of a radio channel. Therefore, a service status of a data flow cannot be dynamically controlled or adjusted, which affects user experience and reduces service efficiency.

### SUMMARY

The subject matter of the invention is defined by the accompanied claims. Embodiments of the present invention provide a data flow transmission method and a device, which can improve flexibility of data flow control.

According to a first aspect, an embodiment of the present invention provides a data flow transmission method, including:
starting, by a traffic detection function TDF in an access network, detection of a service status on a service data flow; and
performing a corresponding operation according to a detection result; or acquiring a policy rule, and performing a corresponding operation according to a detection result and the policy rule wherein the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion, and.
the performing a corresponding operation according to a detection result includes:
sending, by the TDF, the detection result to a policy control node, so that the policy control node configures a policy rule according to the detection result, and sends the policy rule to the TDF; and executing, by the TDF, a control operation according to the policy rule; or
sending, by the TDF, the detection result to a policy control node, so that the policy control node executes a control policy according to the detection result and a policy rule that is locally configured in the policy control node; and
the acquiring a policy rule, and performing a corresponding operation according to a detection result and the policy rule includes: acquiring, by the TDF, the policy rule that is locally configured, and performing, by the TDF, the control operation according to the policy rule when the detection result meets the policy rule.

With reference to the first aspect, in a first possible implementation manner, the control operation includes:
executing, by the TDF, a control policy according to the policy rule; or
sending, by the TDF, the policy rule to a base station, so that the base station executes a control policy according to the policy rule.

According to a second aspect, an embodiment of the present invention provides a data flow transmission method, including:
sending, by a policy control node, a start detection rule to a TDF in an access network instructing the TDF to start detection of a service status on a service data flow according to the start detection rule;
receiving a detection result sent by the TDF, and configuring a policy rule according to the detection result; and
sending the policy rule to the TDF, so that the TDF performs a control operation according to the policy rule;
wherein the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion.

In a first possible implementation manner of the second aspect, the sending, by a policy control node, a start detection rule to a TDF instructing the TDF to start detection of a service status on a service data flow according to the start detection rule includes:
sending, by the policy control node, the start detection rule to a PEF, so that the PEF sends a detection rule to the TDF, and the TDF starts detection on the service data flow according to the detection rule; and
the sending the policy rule to the TDF includes: sending the policy rule to the PEF, so that the PEF sends the policy rule to the TDF.

With reference to the second aspect or the first possible implementation manner of the second aspect, in a second possible implementation manner, the receiving a detection result sent by the TDF includes:
after an ERF receives the detection result sent by the TDF, receiving the detection result sent by the ERF.

According to a third aspect, a data flow transmission method is provided, and the method includes: receiving, by a PEF, a policy rule sent by a policy control node, where the policy rule is a rule configured by the policy control node according to acquired service information of a data flow; and
sending the policy rule to a base station, so that the base station executes a control policy according to the policy rule.

According to a fourth aspect, a TDF is provided and includes:
a detecting unit, configured to start detection of a service status on a service data flow;
a first processing unit, configured to: perform a corresponding operation according to a detection result detected by the detecting unit; or, acquire a policy rule, and perform a corresponding operation according to a detection result detected by the detecting unit and the policy rule; wherein the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion, and
the TDF further includes: a first sending unit and a first receiving unit, where
the first sending unit is configured to send the detection result to a policy control node, so that the policy control node configures a policy rule according to the detection result, and sends the policy rule to the TDF;
the first receiving unit is configured to receive the policy rule sent by the policy control node; and the first processing unit is specifically configured to execute a control operation according to the policy rule received by the first receiving unit;
the first sending unit is further configured to send the detection result to the policy control node, so that the policy control node executes a control policy according to the detection result and a policy rule that is locally configured in the policy control node; and
the first processing unit is specifically configured to: acquire a policy rule that is locally configured, and perform the control operation according to the policy rule when the detection result meets the policy rule.

With reference to the fourth aspect, in a possible implementation manner, the first processing unit is specifically configured to execute a control policy according to the policy rule; and the first sending unit is specifically configured to send the policy rule to a base station, so that the base station executes a control policy according to the policy rule.

According to a fifth aspect, a policy control node is provided and includes:
a second sending unit, configured to send a start detection rule to a TDF in an access network instructing the TDF to start detection of a service status on a service data flow according to the start detection rule;
a second receiving unit, configured to receive a detection result sent by the TDF; and
a second processing unit, configured to configure a policy rule according to the detection result received by the second receiving unit; where
the second sending unit is further configured to send the policy rule to the TDF, so that the TDF performs a control operation according to the policy rule wherein
the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion..

In a first possible implementation of the fourth aspect, the second sending unit is specifically configured to send the start detection rule to a PEF, so that the PEF sends a detection rule to the TDF, and the TDF starts detection on the service data flow according to the detection rule; and
the second sending unit is further specifically configured to send the policy rule to the PEF, so that the PEF sends the policy rule to the TDF.

With reference to the fifth aspect or the first possible implementation manner of the fifth aspect, in a second possible implementation manner, the second receiving unit is specifically configured to receive, after an ERF receives the detection result sent by the TDF, the detection result sent by the ERF.

According to a sixth aspect, a PEF is provided and includes:
a third receiving unit, configured to receive a start detection rule sent by a policy control node; and
a third sending unit, configured to send a detection rule to a TDF according to the start detection rule received by the third receiving unit, so that the TDF starts detection on a service data flow according to the detection rule; where
the third receiving unit is further configured to: receive a policy rule configured by the policy control node according to a received detection result; and send the policy rule to the TDF, so that the TDF performs a control operation according to the policy rule.

In a first possible implementation manner of the sixth aspect, the third sending unit is specifically configured to send a report instruction to an ERF, so that the ERF sends the detection result received from the TDF to the policy control node.

According to a seventh aspect, a base station is provided and includes the TDF described in the foregoing fourth aspect.

In a first possible implementation manner of the seventh aspect, the base station further includes the PEF and the ERF described in the foregoing sixth aspect, where the ERF is configured to send a detection result received from the TDF to a policy control node.

According to an eighth aspect, a PEF is provided and includes:
a fourth receiving unit, configured to receive a policy rule sent by a policy control node, where the policy rule is a rule configured by the policy control node according to acquired service information of a data flow; and
a fourth sending unit, configured to send the policy rule to a base station, so that the base station executes a control policy according to the policy rule.

According to a ninth aspect, a base station is provided and includes the PEF described in the foregoing eighth aspect.

According to the foregoing solutions, a TDF detects a service status of a data flow, and sends a detection result to a PRF, so that the PRF configures a policy rule and sends the policy rule to the TDF; therefore, the TDF can execute a control operation according to the policy rule. In this way, flexibility of data flow control by a device on an access network side can be improved, further improving user experience and service efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a data flow transmission method according to an embodiment of the present invention;
FIG. 2 is a schematic diagram of another data flow transmission method according to an embodiment of the present invention;
FIG. 3 is a schematic diagram of another data flow transmission method according to an embodiment of the present invention;
FIG. 4 is a schematic flowchart of a data flow transmission method according to an embodiment of the present invention;
FIG. 5 is a schematic flowchart of another data flow transmission method according to an embodiment of the present invention;
FIG. 6 is a schematic flowchart of another data flow transmission method according to an embodiment of the present invention;
FIG. 7 is a schematic flowchart of another data flow transmission method according to an embodiment of the present invention;
FIG. 8 is a schematic structural diagram of a TDF according to an embodiment of the present invention;
FIG. 9 is a schematic structural diagram of another TDF according to an embodiment of the present invention;
FIG. 10 is a schematic structural diagram of a PRF according to an embodiment of the present invention;
FIG. 11 is a schematic structural diagram of a PEF according to an embodiment of the present invention;
FIG. 12 is a schematic structural diagram of a base station according to an embodiment of the present invention;
FIG. 13 is a schematic structural diagram of another base station according to an embodiment of the present invention;
FIG. 14 is a schematic structural diagram of another PEF according to an embodiment of the present invention; and
FIG. 15 is a schematic structural diagram of another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

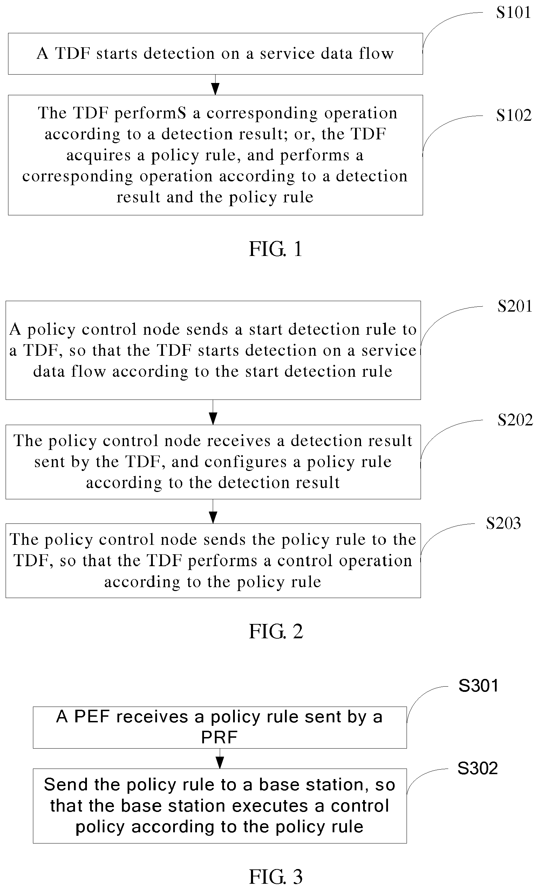

An embodiment of the present invention provides a data flow transmission method. As shown in FIG. 1, an execution body of the method is a TDF (Traffic Detection Function, traffic detection function), where the TDF is located in a network on an access side. The method includes the following steps:
S101: The TDF starts detection on a service data flow.

Optionally, the TDF may start detection on the service data flow according to a local configuration.

For example, detection performed on the service data flow by the TDF according to the local configuration may be detection performed on a service of a specific type, for example, detection performed on a currently provided service data flow of a video type, or detection performed on a service data flow of an instant messaging type;
detection performed on the service data flow by the TDF according to the local configuration may be detection performed in a specific status, for example, detection performed on the service data flow in a case in which load of a network device reaches a level; and
detection performed on the service data flow by the TDF according to the local configuration may be detection performed on a specific user, for example, detection performed, after a certain type of user at a specific level accesses a service, on a service data flow of the user.

Optionally, the TDF may receive a start detection rule sent by a policy control node (for example, a PRF (Policy Rule Function, policy rule function entity)), and start detection on the service data flow according to the start detection rule.

Optionally, the policy control node may acquire service information of the data flow by using a service information management system, for example, an AF (Application Function, application function entity) or an IMS (IP Multimedia Subsystem, IP multimedia subsystem), and send the start detection rule to the TDF according to the service information. The service information may include:
a service type, for example, a video service, instant messaging, downloading, and VoIP;
required bandwidth of a service; and
a service priority.

It should be noted that the foregoing start detection rule may be the following five manners; however, this embodiment of the present invention is not limited to the five manners.
Manner 1: instructing the TDF to detect a service status, and reporting the service status. For example, the start detection rule may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM (Instant Messenging, instant messaging), Video (video), HTTP Streaming (HyperText Transport Protocol Streaming, HyperText Transport Protocol Streaming), P2P (Peer-to-Peer, peer-to-peer) Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the start detection rule.
Manner 4: instructing the TDF to detect a service flow of one or more UEs. Optionally, a UE identifier may be carried in the start detection rule.
Manner 5: instructing the TDF to detect a service data flow connected to one or more control nodes. Optionally, a PDN connection identifier may be carried in the start detection rule.

Optionally, after a PEF (Policy Enforcement Function, policy enforcement function entity) receives the start detection rule sent by the policy control node (for example, the PRF), the TDF receives a detection rule sent by the PEF, and starts detection on the service data flow according to the detection rule.

S102: The TDF performs a corresponding operation according to a detection result; or the TDF acquires a policy rule, and performs a corresponding operation according to a detection result and the policy rule.

The detection result may include at least one of the following types of information:
congestion status information of the base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

In one aspect, that the TDF performs a corresponding operation according to a detection result includes the following two operations:
Operation 1: The TDF sends the detection result to the policy control node, so that the policy control node configures a policy rule according to the detection result, and sends the policy rule to the TDF; and the TDF performs a control operation according to the policy rule.

Optionally, the control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, the PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

Further, the TDF sends the detection result to an ERF (Event Reporting Function, event reporting function entity), so that the ERF sends the detection result to the policy control node, which is only an implementation manner, but shall fall within the protection scope of the present invention.

Optionally, the TDF sends the detection result to the policy control node when the detection result meets a preset condition, where the preset condition may be set according to practical application or an empirical value.

For example, the detection result is sent to the policy control node when it is detected that a service status of the service data flow reaches a congestion status of the base station.

Optionally, the TDF sends the detection result to the ERF, so that the ERF sends the detection result to the policy control node after receiving a control rule sent by a PEF.

Operation 2: The TDF sends the detection result to the policy control node (for example, the PDN gateway), so that the policy control node executes a control policy according to the detection result and a policy rule that is locally configured in the policy control node.

For example, if the detection result indicates that an access network has a relatively high resource utilization rate or is in a congested state, a policy rule that is correspondingly configured is reducing service traffic by reducing available bandwidth of a service, for example, configuring the available bandwidth of the service, so as to achieve an objective of relieving congestion of the access network. A control policy that is executed according to the policy rule is reducing the available bandwidth of the service by a control node.

For another example, if the detection result indicates that an access network has a relatively low resource utilization rate or is in a non-congested state, a policy rule that is correspondingly configured is increasing service traffic by recovering or increasing available bandwidth of a service, for example, configuring the available bandwidth of the service, so as to achieve an objective of increasing a throughput of a user and a cell. A control policy that is executed according to the policy rule is recovering or increasing the available bandwidth of the service by a control node.

Further, the TDF sends the detection result to an ERF, so that the ERF sends the detection result to the policy control node, which is only an implementation manner, but shall fall within the protection scope of the present invention.

Optionally, the TDF sends the detection result to the policy control node when the detection result meets a preset condition, where the preset condition may be set according to practical application or an empirical value.

For example, the detection result is sent to the policy control node when it is detected that a service status of the service data flow reaches a congestion status of the base station.

Optionally, the TDF sends the detection result to the ERF, so that the ERF sends the detection result to the policy control node after receiving a control rule sent by a PEF.

In another aspect, that the TDF acquires a policy rule, and performs a control operation according to a detection result and the policy rule specifically may be that: the TDF acquires a policy rule that is locally configured, and the TDF performs the control operation according to the policy rule when the detection result meets the policy rule.

Optionally, the control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, the PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

It should be noted that the foregoing policy control node is not limited to the PRF or the PDN gateway, and may further be an MME (Mobility Management Entity, Mobility Management Entity), an SGW (Serving Gateway, serving gateway), or the like, which is not limited in the present invention.

By using the foregoing solution in which an execution body is a TDF, flexibility of data flow control by a device on an access network side can be improved, thereby further improving user experience and service efficiency.

An embodiment of the present invention provides a data flow transmission method. As shown in FIG. 2, an execution body of the method is a policy control node, where the policy control node may be a PRF, which is not limited in this embodiment of the present invention. The method includes the following steps:

S201: The policy control node sends a start detection rule to a TDF, so that the TDF starts detection on a service data flow according to the start detection rule.

The policy control node may acquire service information of a data flow by using a service information management system, for example, an AF or an IMS, and send the start detection rule to the TDF according to the service information. The service information may include:
a service type, for example, a video service, instant messaging, downloading, and VoIP;
required bandwidth of a service; and
a service priority.

It should be noted that the foregoing start detection rule may be the following five manners; however, this embodiment of the present invention is not limited to the five manners.
Manner 1: instructing the TDF to detect a service status, and reporting the service status. For example, the start detection rule may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM, Video (video), HTTP Streaming, P2P Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the start detection rule.
Manner 4: instructing the TDF to detect a service flow of one or more UEs. Optionally, a UE identifier may be carried in the start detection rule.
Manner 5: instructing the TDF to detect a service data flow connected to one or more control nodes. Optionally, a PDN connection identifier may be carried in the start detection rule.

Optionally, a PRF sends the start detection rule to a PEF, so that the PEF sends a detection rule to the TDF, and the TDF starts detection on the service data flow according to the detection rule. For the detection rule, reference may be made to the foregoing description of the start detection rule, and details are not described herein again.

S202: The policy control node receives a detection result sent by the TDF, and configures a policy rule according to the detection result.

The detection result may include at least one of the following types of information:
congestion status information of the base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

Further, after an ERF receives the detection result sent by the TDF, the detection result sent by the ERF is received, which is only an implementation manner, but shall fall within the protection scope of the present invention.

In addition, the ERF may send the detection result to the policy control node after receiving a report instruction sent by the PEF. In this way, the PEF performs control on sending of the detection result by the ERF, thereby implementing system control on a data flow more flexibly.

It should be noted that the foregoing ERF may further include a function of the PEF.

S203: The policy control node sends the policy rule to the TDF, so that the TDF performs a control operation according to the policy rule.

Optionally, the foregoing step S203 in which the policy control node sends the policy rule to the TDF may further be that the policy control node sends the policy rule to the PEF, so that the PEF sends the policy rule to the TDF.

The control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow; however, the base station performs control on the service data flow according to a policy rule that is received from and configured by the TDF or the policy control node (for example, the PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

In addition, if the ERF includes a function of the PEF, the policy control node directly sends the policy rule to the ERF, which is not limited in the present invention.

By using the foregoing solution in which an execution body is a policy control node, flexibility of data flow control by a device on an access network side can be improved, thereby further improving user experience and service efficiency.

An embodiment of the present invention provides a data flow transmission method. As shown in FIG. 3, an execution body of the method is a PEF, where a PRF is used as an example to describe a policy control node in the method embodiment. The method includes the following steps:
S301: The PEF receives a policy rule sent by the PRF.

The policy rule is a rule configured by the PRF according to acquired service information of a data flow.

For example, the policy rule includes but is not limited to the following rules:
personal subscription scheduling policy information of a user, for example, a requirement for a high delay and a low packet loss rate, a requirement for a low delay and a low packet loss rate, a requirement for a low delay and a high packet loss rate, or a requirement for a high delay and a high packet loss rate; and scheduling priority information of a user;
scheduling policy information required by a content provider and a service provider with whom a user signs a contract, for example, a requirement for a high delay and a low packet loss rate, a requirement for a low delay and a low packet loss rate, a requirement for a low delay and a high packet loss rate, or a requirement for a high delay and a high packet loss rate;
adjusting scheduling priority information of a service, for example, setting a priority, increasing a priority, or reducing a priority;
adjusting a packet loss rate requirement of a service, for example, setting the packet loss rate requirement of the service, increasing the packet loss rate requirement, or a reducing the packet loss rate requirement; and
adjusting a delay requirement of a service, for example, setting the delay requirement of the service, increasing the delay requirement, or reducing a delay requirement.

S302: Send the policy rule to a base station, so that the base station executes a control policy according to the policy rule.

For example, if a current user prefers a high delay and a low packet loss rate, the base station may send data to a UE as quickly as possible in a transmission manner with low reliability, so as to reduce an air-interface transmission delay of the data.

For another example, if a current user prefers a low delay and high reliability, the base station may send data to a UE as reliably as possible in a transmission manner with high reliability, so as to increase an air-interface transmission delay of the data.

It should be noted that the foregoing PEF may further be included in the base station, and in this case, interaction with the PEF in the foregoing step may be considered as interaction with the base station, and interaction between the PEF and the base station may also be considered as internal interaction in the base station.

By using the foregoing solution in which an execution body is a PEF, flexibility of data flow control by a device on an access network side can be improved, thereby further improving user experience and service efficiency.

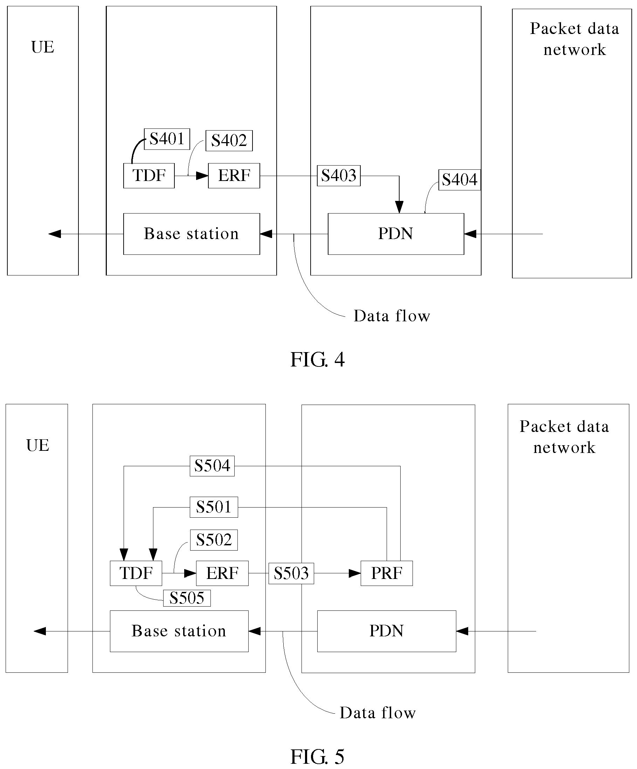

An embodiment of the present invention provides a data flow transmission method. As shown in FIG. 4, downlink transmission of a data flow is used as an example for description in this embodiment of the present invention. In this embodiment, a PDN gateway is used as a policy control node for description, which is not limited in this embodiment of the present invention. The policy control node may further be an MME or an SGW. The method includes the following steps:
S401: A TDF starts detection on a service data flow according to a local configuration.
S402: The TDF sends a detection result to an ERF.

The detection result may include at least one of the following types of information:
congestion status information of a base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

S403: The ERF sends the detection result to the PDN gateway.

S404: The PDN gateway executes a control policy according to the detection result and a policy rule that is locally configured in the policy control node.

For example, if the detection result indicates that an access network has a relatively high resource utilization rate or is in a congested state, a policy rule that is correspondingly configured is reducing service traffic by reducing available bandwidth of a service, for example, configuring the available bandwidth of the service, so as to achieve an objective of relieving congestion of the access network. A control policy that is executed according to the policy rule is reducing the available bandwidth of the service by a control node.

For another example, if the detection result indicates that an access network has a relatively low resource utilization rate or is in a non-congested state, a policy rule that is correspondingly configured is increasing service traffic by recovering or increasing available bandwidth of a service, for example, configuring the available bandwidth of the service, so as to achieve an objective of increasing a throughput of a user and a cell. A control policy that is executed according to the policy rule is recovering or increasing the available bandwidth of the service by a control node.

It should be noted that the foregoing TDF and the ERF may further be included in the base station, and in this case, the foregoing interaction related to the TDF and the ERF may all be interaction with the base station, and interaction between the TDF as well as the ERF and the base station may also be considered as internal interaction in the base station.

Moreover, for brief description, the foregoing method embodiments are represented as a series of actions. However, a person skilled in the art should appreciate that the present invention is not limited to the described order of the actions. In addition, a person skilled in the art should also understand that all the embodiments described in this specification belong to exemplary embodiments, and the involved actions and modules are not necessarily mandatory to the present invention.

By using the foregoing solution, flexibility of data flow control by a device on an access network side can be improved, thereby further improving user experience and service efficiency.

An embodiment of the present invention provides a data flow transmission method. As shown in FIG. 5, downlink transmission of a data flow is used as an example for description in this embodiment of the present invention. In this embodiment of the present invention, a PRF is used as an example to describe a policy control node, which is not limited in this embodiment of the present invention. The method includes the following steps:
S501: The PRF sends a start detection rule to a TDF according to acquired service information of a service data flow.

The PRF may acquire the service information from an AF or an IMS, where the service information may include:
a service type, for example, a video service, instant messaging, downloading, and VoIP;
required bandwidth of a service; and
a service priority.

It should be noted that the foregoing start detection rule may be the following five manners; however, this embodiment of the present invention is not limited to the five manners.
Manner 1: instructing the TDF to detect a service status, and reporting the service status. For example, the start detection rule may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM, Video (video), HTTP Streaming, P2P Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the start detection rule.
Manner 4: instructing the TDF to detect a service flow of one or more UEs. Optionally, a UE identifier may be carried in the start detection rule.
Manner 5: instructing the TDF to detect a service data flow connected to one or more control nodes. Optionally, a PDN connection identifier may be carried in the start detection rule.

S502: The TDF starts detection on the service data flow according to the start detection rule, and sends a detection result to an ERF.

The detection result may include at least one of the following types of information:
congestion status information of the base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

S503: The ERF sends the detection result to the PRF.

S504: The PRF configures a policy rule according to the detection result, and sends the policy rule to the TDF.

S505: The TDF performs a control operation according to the policy rule.

Optionally, the control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, the PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

It should be noted that the foregoing TDF and the ERF may further be included in the base station, and in this case, the foregoing interaction related to the TDF and the ERF may all be interaction with the base station, and interaction between the TDF as well as the ERF and the base station may also be considered as internal interaction in the base station.

Moreover, for brief description, the foregoing method embodiments are represented as a series of actions. However, a person skilled in the art should appreciate that the present invention is not limited to the described order of the actions. In addition, a person skilled in the art should also understand that all the embodiments described in this specification belong to exemplary embodiments, and the involved actions and modules are not necessarily mandatory to the present invention.

By using the foregoing solution, flexibility of data flow control by a device on an access network side can be improved, thereby further improving user experience and service efficiency.

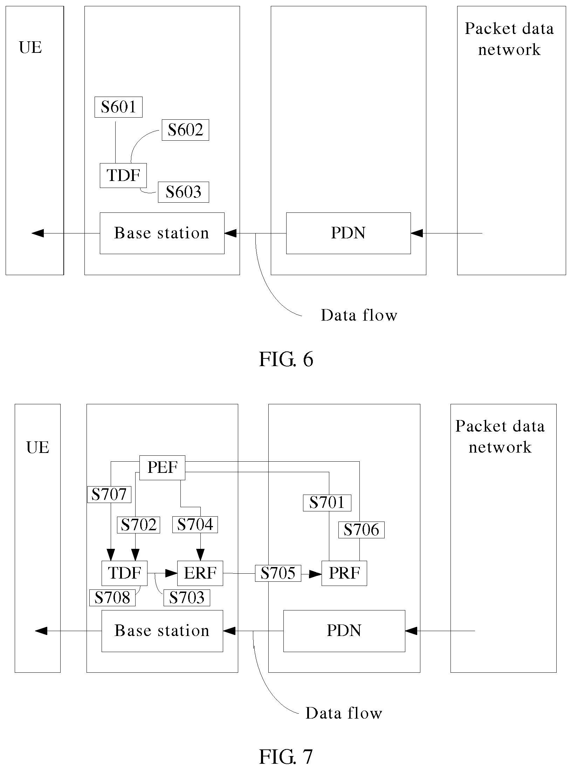

An embodiment of the present invention provides a data flow transmission method. As shown in FIG. 6, downlink transmission of a data flow is used as an example for description in this embodiment of the present invention. The method includes the following steps:

S601: A TDF determines to start detection on a service data flow according to a local configuration.

For example, detection performed on the service data flow by the TDF according to the local configuration may be detection performed on a service of a specific type, for example, detection performed on a currently provided service data flow of a video type, or detection performed on a service data flow of an instant messaging type;
detection performed on the service data flow by the TDF according to the local configuration may be detection performed in a specific status, for example, detection performed on the service data flow in a case in which load of a network device reaches a level; and
detection performed on the service data flow by the TDF according to the local configuration may be detection performed on a specific user, for example, detection performed, after a certain type of user at a specific level accesses a service, on a service data flow of the user.

S602: The TDF acquires a policy rule that is locally configured.

S603: The TDF performs a control operation according to the policy rule when a detection result meets the policy rule.

Optionally, the control operation may be that: the TDF executes a control policy according to the policy rule; or
the control operation may further be that: the TDF sends the policy rule to a base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by a policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by a policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow; however, the base station performs control on the service data flow according to a policy rule that is received from and configured by the TDF or a policy control node (for example, a PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

It should be noted that the foregoing TDF may further be included in the base station, and in this case, the foregoing interaction related to the TDF may all be interaction with the base station, and interaction between the TDF and the base station may also be considered as internal interaction in the base station.

Moreover, for brief description, the foregoing method embodiments are represented as a series of actions. However, a person skilled in the art should appreciate that the present invention is not limited to the described order of the actions. In addition, a person skilled in the art should also understand that all the embodiments described in this specification belong to exemplary embodiments, and the involved actions and modules are not necessarily mandatory to the present invention.

By using the foregoing solution, flexibility of data flow control by a device on an access network side can be improved, thereby further improving user experience and service efficiency.

An embodiment of the present invention provides a data flow transmission method. As shown in FIG. 7, downlink transmission of a data flow is used as an example for description in this embodiment of the present invention. In this embodiment of the present invention, a PRF is used as an example to illustrate a policy control node, which is not limited in this embodiment of the present invention. The method includes the following steps:
S701: The PRF sends a start detection rule to a PEF according to acquired service information of a service data flow.

The PRF may acquire service information of a data flow by using a service information management system, for example, an AF or an IMS, and send the start detection rule to the TDF according to the service information. The service information may include:
a service type, for example, a video service, instant messaging, downloading, and VoIP;
required bandwidth of a service; and
a service priority.

S702: The PEF sends a detection rule to a TDF according to the start detection rule, so as to instruct the TDF to perform detection on the service data flow.

The foregoing start detection rule may be the following five manners; however, this embodiment of the present invention is not limited to the five manners.
Manner 1: instructing the TDF to detect a service status, and reporting the service status. For example, the detection rule may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM, Video (video), HTTP Streaming, P2P Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the detection rule.
Manner 4: instructing the TDF to detect a service flow of one or more UEs. Optionally, a UE identifier may be carried in the detection rule.
Manner 5: instructing the TDF to detect a service data flow connected to one or more control nodes. Optionally, a PDN connection identifier may be carried in the detection rule.

For description of the foregoing detection rule, reference may be made to the foregoing description of the start detection rule, and details are not described herein again.

S703: The TDF starts detection on the service data flow according to the detection rule, and sends a detection result to an ERF.

The detection result may include at least one of the following types of information:
congestion status information of the base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

S704: The ERF receives a report instruction sent by the PEF, so as to determine that the detection result is sent to the PRF.

In this way, the PEF can flexibly control, according to a service status, sending of the detection result to the PRF by the ERF.

S705: The ERF sends the detection result to the PRF according to the report instruction.

S706: The PRF configures a policy rule according to the detection result, and sends the policy rule to the PEF.

S707: The PEF sends the policy rule to the TDF.

S708: The TDF performs a control operation according to the policy rule.

Optionally, the control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, the PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, the PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

It should be noted that the foregoing TDF, the ERF, and the PEF may further be included in the base station, and in this case, the foregoing interaction related to the TDF, the ERF, and the PEF may all be interaction with the base station; however, interaction between the TDF, the ERF, and the PEF and the base station may also be considered as internal interaction in the base station.

Further, the foregoing ERF may also include a function of the foregoing PEF, in this case, the foregoing interaction with the PEF may also be considered as interaction with the ERF.

Moreover, for brief description, the foregoing method embodiments are represented as a series of actions. However, a person skilled in the art should appreciate that the present invention is not limited to the described order of the actions. In addition, a person skilled in the art should also understand that all the embodiments described in this specification belong to exemplary embodiments, and the involved actions and modules are not necessarily mandatory to the present invention.

By using the foregoing solution, flexibility of data flow control by a device on an access network side can be improved, thereby further improving user experience and service efficiency.

Downlink transmission of a data flow is used as an example for description in the foregoing embodiments, and the present invention is not limited thereto. The present invention is also applicable to uplink transmission of a data flow, a specific process is the same as that in the foregoing embodiments, and details are not described herein again.

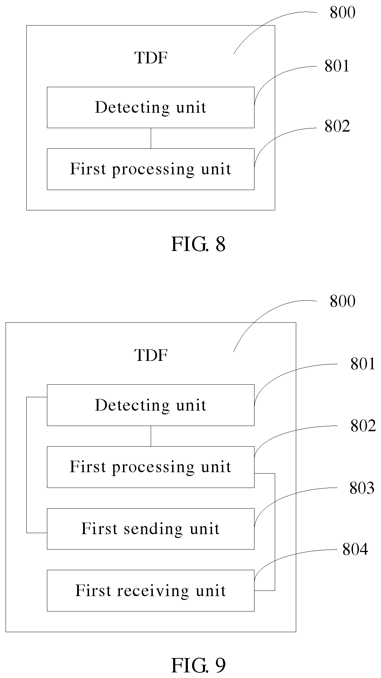

An embodiment of the present invention provides a TDF 800. As shown in FIG. 8, the TDF 800 includes:
a detecting unit 801, configured to start detection on a service data flow; and
a first processing unit 802, configured to: perform a corresponding operation according to a detection result detected by the detecting unit 801; or, acquire a policy rule, and perform a corresponding operation according to a detection result detected by the detecting unit 801 and the policy rule.

Further, as shown in FIG. 9, the TDF 800 further includes: a first sending unit 803 and a first receiving unit 804.

The first sending unit 803 is configured to send the detection result to a policy control node, so that the policy control node configures a policy rule according to the detection result, and sends the policy rule to the TDF 800.

The detection result may include at least one of the following types of information:
congestion status information of a base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

The first receiving unit 804 is configured to receive the policy rule sent by the policy control node; and the first processing unit 802 is specifically configured to execute a control operation according to the policy rule received by the first receiving unit 804.

The first sending unit 803 is further configured to send the detection result to the policy control node, so that the policy control node executes a control policy according to the detection result and a policy rule that is locally configured in the policy control node.

For example, if the detection result indicates that an access network has a relatively high resource utilization rate or is in a congested state, a policy rule that is correspondingly configured is reducing service traffic by reducing available bandwidth of a service, for example, configuring the available bandwidth of the service, so as to achieve an objective of relieving congestion of the access network. A control policy that is executed according to the policy rule is reducing the available bandwidth of the service by a control node.

For another example, if the detection result indicates that an access network has a relatively low resource utilization rate or is in a non-congested state, a policy rule that is correspondingly configured is increasing service traffic by recovering or increasing available bandwidth of a service, for example, configuring the available bandwidth of the service, so as to achieve an objective of increasing a throughput of a user and a cell. A control policy that is executed according to the policy rule is recovering or increasing the available bandwidth of the service by a control node.
the first processing unit 802 is specifically configured to: acquire a policy rule that is locally configured, and perform the control operation according to the policy rule when the detection result meets the policy rule.

The control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, a PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

Optionally, the first processing unit 802 is specifically configured to execute a control policy according to the policy rule; and the first sending unit 803 is specifically configured to send the policy rule to the base station, so that the base station executes a control policy according to the policy rule.

Optionally, the first sending unit 803 is specifically configured to send the detection result to an ERF, so that the ERF sends the detection result to the policy control node.

Optionally, the first sending unit 803 is specifically configured to send the detection result to the policy control node when the detection result meets a preset condition.

For example, the detection result is sent to the PRF when it is detected that a service status of the service data flow reaches a congestion status of the base station.

Optionally, the first sending unit 803 is specifically configured to send the detection result to the ERF, so that the ERF sends the detection result to the PRF after receiving a control rule sent by a PEF.

Optionally, the detecting unit 801 is specifically configured to determine to start detection on the service data flow according to a local configuration.

For example, detection performed on the service data flow by the TDF according to the local configuration may be detection performed on a service of a specific type, for example, detection performed on a currently provided service data flow of a video type, or detection performed on a service data flow of an instant messaging type;
detection performed on the service data flow by the TDF according to the local configuration may be detection performed in a specific status, for example, detection performed on the service data flow in a case in which load of a network device reaches a level; and
detection performed on the service data flow by the TDF according to the local configuration may be detection performed on a specific user, for example, detection performed, after a certain type of user at a specific level accesses a service, on a service data flow of the user.

The first receiving unit 804 is configured to receive a start detection rule sent by the PRF; and the first processing unit 802 starts detection on the service data flow according to the start detection rule received by the first receiving unit 804.

It should be noted that the foregoing start detection rule may be the following five manners; however, this embodiment of the present invention is not limited to the five manners.
Manner 1: instructing the TDF to detect a service status, and reporting the service status. For example, the start detection rule may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM, Video (video), HTTP Streaming, P2P Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the start detection rule.
Manner 4: instructing the TDF to detect a service flow of one or more UEs. Optionally, a UE identifier may be carried in the start detection rule.
Manner 5: instructing the TDF to detect a service data flow connected to one or more control nodes. Optionally, a PDN connection identifier may be carried in the start detection rule.

Specifically, the PRF acquires service information of a data flow (for example, acquires from an entity, such as an AF or an IMS), and sends the start detection rule to the TDF according to the service information.

The service information may include:
a service type, for example, a video service, instant messaging, downloading, and VoIP;
required bandwidth of a service; and
a service priority.

Optionally, the first receiving unit 804 is specifically configured to receive, after the PEF receives the start detection rule sent by the PRF, a detection rule sent by the PEF.

It should be noted that the foregoing policy control node is not limited to the PRF or the PDN gateway, and may further be an MME an SGW, or the like, which is not limited in the present invention.

In addition, it may be clearly understood by a person skilled in the art that, for the purpose of convenient and brief description, for a detailed working process of the foregoing described TDF, reference may be made to a corresponding process in the foregoing method embodiments, and details are not described herein again.

By using the foregoing TDF, flexibility of data flow control by a device on an access network side can be improved, thereby further improving user experience and service efficiency.

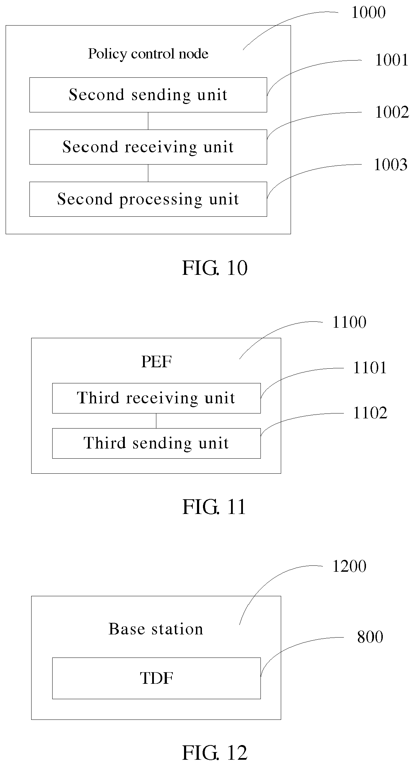

An embodiment of the present invention provides a policy control node 1000. As shown in FIG. 10, the policy control node 1000 includes:

the second sending unit 1001 is configured to send a start detection rule to a TDF, so that the TDF starts detection on a service data flow according to the start detection rule.

The policy control node 1000 acquires service information of a data flow (for example, acquires from an entity, such as an AF or an IMS), and sends the start detection rule to the TDF according to the service information.

The service information may include:
a service type, for example, a video service, instant messaging, downloading, and VoIP;
required bandwidth of a service; and
a service priority.

It should be noted that the foregoing start detection rule may be the following five manners; however, this embodiment of the present invention is not limited to the five manners.
Manner 1: instructing the TDF to detect a service status, and reporting the service status. For example, the start detection rule may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM, Video (video), HTTP Streaming, P2P Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the start detection rule.
Manner 4: instructing the TDF to detect a service flow of one or more UEs. Optionally, a UE identifier may be carried in the start detection rule.
Manner 5: instructing the TDF to detect a service data flow connected to one or more control nodes. Optionally, a PDN connection identifier may be carried in the start detection rule.
the second receiving unit 1002 is configured to receive a detection result sent by the TDF.

The detection result may include at least one of the following types of information:
congestion status information of the base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

The second processing unit 1003 is configured to configure a policy rule according to the detection result received by the second receiving unit 1002.

The second sending unit 1001 is further configured to send the policy rule to the TDF, so that the TDF performs a control operation according to the policy rule.

The control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, a PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

Optionally, the second sending unit 1001 is further specifically configured to send the start detection rule to a PEF, so that the PEF sends a detection rule to the TDF.

The second sending unit 1001 is further specifically configured to send the policy rule to the PEF, so that the PEF sends the policy rule to the TDF.

Optionally, the second receiving unit 1002 is specifically configured to receive, after an ERF receives the detection result sent by the TDF, the detection rule sent by the ERF.

It should be noted that, it may be clearly understood by a person skilled in the art that, for the purpose of convenient and brief description, for a detailed working process of the foregoing described policy control node, reference may be made to a corresponding process in the foregoing method embodiments, and details are not described herein again.

By using the foregoing policy control node, flexibility of data flow control by a device on an access network side can be improved, thereby further improving user experience and service efficiency.

An embodiment of the present invention provides a PEF 1100. As shown in FIG. 11, the PEF 1100 includes:
a third receiving unit 1101, configured to receive a start detection rule sent by a policy control node; and
a third sending unit 1102, configured to send a detection rule to a TDF according to the start detection rule received by the third receiving unit 1101, so that the TDF starts detection on a service data flow according to the detection rule.

The start detection rule may be the following five manners; however, this embodiment of the present invention is not limited to the five manners.
Manner 1: instructing the TDF to detect a service status, and reporting the service status. For example, a start detection command may instruct the TDF to detect a service congestion status of a base station, and when a service of the base station reaches a specific congestion status, trigger report of a service congestion status indication of the base station to a control node (for example, a PDN gateway); and may further instruct the TDF to detect a current service congestion status of the base station, and immediately report the current service congestion status of the base station.
Manner 2: instructing the TDF to detect a service of a specific type, for example, IM, Video (video), HTTP Streaming, P2P Video, P2P Download (downloading), and VoIP; or an application identifier, a service data flow characteristic, and the like.
Manner 3: instructing the TDF to detect a service with a specific characteristic, and including service characteristic information of a to-be-detected service, such as a packet size characteristic of the service, arrival interval information of service packets, service traffic bandwidth information, and a characteristic of access network device resource occupation by the service, into the start detection rule.
Manner 4: instructing the TDF to detect a service flow of one or more UEs. Optionally, a UE identifier may be carried in the start detection rule.
Manner 5: instructing the TDF to detect a service data flow connected to one or more control nodes. Optionally, a PDN connection identifier may be carried in the start detection rule.

For description of the detection rule, reference may be made to the foregoing description of the start detection rule, and details are not described herein again.

The third receiving unit 1101 is further configured to: receive a policy rule configured by the policy control node according to a received detection result; and send the policy rule to the TDF, so that the TDF performs a control operation according to the policy rule.

The detection result may include at least one of the following types of information:
congestion status information of the base station, which includes congested, not congested, and idle; and congestion level information, which includes severe congestion, mild congestion, no congestion, idleness, and the like;
physical resource utilization information of the base station, which includes a physical resource block utilization condition, a control signaling utilization condition, and a data channel utilization condition, for example, a utilization percentage;
buffer utilization information of the base station, which includes low buffer occupation, moderate buffer occupation, high buffer occupation, buffer overflow, and the like; which may also be a buffer occupation rate, for example, a buffer occupation percentage; or may be a buffer occupation amount;
a quantity of user devices that are currently in a connected state, or a ratio of a quantity of users to a user capacity of the base station;
a currently used congestion control policy, for example, a packet loss level, where service data may be classified into multiple levels, and in a case of congestion, the base station may use a policy of discarding data packets according to different levels of the data packets; for example, in a case of mild congestion, only data of a lowest priority is discarded, and in a case of moderate congestion, data of a medium priority is discarded; and
a packet loss condition of a bearer or a service data flow caused by congestion, for example, a packet loss rate caused by congestion.

Optionally, the control operation may be that: the TDF executes a control policy according to the policy rule; or
the control operation may further be that: the TDF sends the policy rule to the base station, so that the base station executes a control policy according to the policy rule.

Specifically, in implementation, the service data flow may directly flow to the TDF, and the TDF performs detection on the service data flow, or performs control on the service data flow according to a policy rule that is received from and configured by the policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow, or performs control on the service data flow according to a policy rule that is received from and configured by the policy control node (for example, a PRF); and then the service data flow flows to the base station from the TDF, and further, the service data flow is scheduled to a user; or
the service data flow may flow to the base station, and flow to the TDF from the base station, and the TDF performs detection on the service data flow; the base station performs control on the service data flow according to a policy rule that is received from and configured by the TDF or the policy control node (for example, a PRF); and then the service data flow is further scheduled to a user. The foregoing execution manners are not limited in this embodiment of the present invention; however, regardless of a manner that is adopted, it shall fall within the protection scope of the present invention.

For example, when the TDF detects that an HTTP Streaming service has a relatively high resource occupation rate, a policy rule that is correspondingly configured may be limiting bandwidth of the HTTP Streaming service, for example, configuring available bandwidth of the HTTP Streaming, so as to relieve base station congestion or service congestion. A control policy that is executed according to the policy rule is configuring the available bandwidth of the HTTP Streaming, so as to limit the bandwidth of the HTTP Streaming service.

For another example, when it is detected that traffic of a kind of service of a UE is extremely large, a policy rule that is correspondingly configured may be limiting a transmission rate of the service, for example, configuring an available rate of the service. A control policy that is executed according to the policy rule is configuring the available rate of the service, so as to limit the transmission rate of the service.

For still another example, when it is detected that a kind of service of a UE is a service that may be prohibited by a network, a policy rule that is correspondingly configured may be suspending scheduling and transmission of the service. A control policy that is executed according to the policy rule is suspending scheduling and transmission of the service.

Further, the third sending unit 1102 is specifically configured to send a report instruction to an ERF, so that the ERF sends the detection result received from the TDF to the policy control node.

In this way, the PEF 1100 can flexibly control, according to a service status, sending of the detection result to the policy control node by the ERF.

It should be noted that, it may be clearly understood by a person skilled in the art that, for the purpose of convenient and brief description, for a detailed working process of the foregoing described PEF, reference may be made to a corresponding process in the foregoing method embodiments, and details are not described herein again.

By using the foregoing PEF, flexibility of data flow control by a device on an access network side can be improved, thereby further improving user experience and service efficiency.

An embodiment of the present invention provides a base station 1200. As shown in FIG. 12, the base station 1200 includes the foregoing TDF 800.

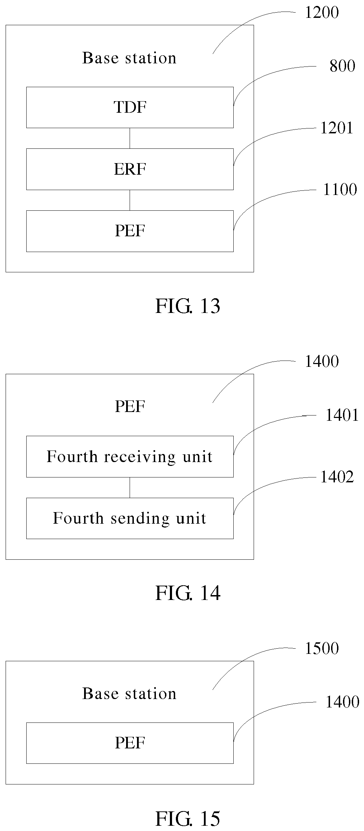

Optionally, as shown in FIG. 13, the base station 1200 further includes the foregoing PEF 1100 and an ERF 1201.

The ERF 1201 is configured to send a detection result received from the TDF 800 to a PRF.

Further, the ERF 1201 is specifically configured to: receive a report instruction sent by the PEF 1100, and send the detection result to the policy control node.

The TDF and the PEF in the foregoing base station are applied to the foregoing data flow transmission methods, and units in the TDF and the PEF also correspond to steps in the methods.

By using the foregoing base station, flexibility of data flow control by a device on an access network side can be improved, thereby further improving user experience and service efficiency.

An embodiment of the present invention provides a PEF 1400. As shown in FIG. 14, the PEF 1400 includes a fourth receiving unit 1401 and a fourth sending unit 1402.

The fourth receiving unit 1401 is configured to receive a policy rule sent by a policy control node.

The policy rule is a rule configured by a PRF according to acquired service information of a data flow.

For example, the policy rule includes but is not limited to the following rules:
personal subscription scheduling policy information of a user, for example, a requirement for a high delay and a low packet loss rate, a requirement for a low delay and a low packet loss rate, a requirement for a low delay and a high packet loss rate, or a requirement for a high delay and a high packet loss rate; and scheduling priority information of a user;
scheduling policy information required by a content provider and a service provider with whom a user signs a contract, for example, a requirement for a high delay and a low packet loss rate, a requirement for a low delay and a low packet loss rate, a requirement for a low delay and a high packet loss rate, or a requirement for a high delay and a high packet loss rate;
adjusting scheduling priority information of a service, for example, setting a priority, increasing a priority, or reducing a priority;
adjusting a packet loss rate requirement of a service, for example, setting the packet loss rate requirement of the service, increasing the packet loss rate requirement, or a reducing the packet loss rate requirement; and
adjusting a delay requirement of a service, for example, setting the delay requirement of the service, increasing the delay requirement, or reducing a delay requirement.

The fourth sending unit 1402 is configured to send the policy rule to a base station, so that the base station executes a control policy according to the policy rule.

For example, if a current user prefers a high delay and a low packet loss rate, the base station may send data to a UE as quickly as possible in a transmission manner with low reliability, so as to reduce an air-interface transmission delay of the data.

For another example, if a current user prefers a low delay and high reliability, the base station may send data to a UE as reliably as possible in a transmission manner with high reliability, so as to increase an air-interface transmission delay of the data.

By using the foregoing PEF, flexibility of data flow control by a device on an access network side can be improved, thereby further improving user experience and service efficiency.

An embodiment of the present invention provides a base station 1500. As shown in FIG. 15, the base station 1500 includes the foregoing PEF 1400.

The PEF in the foregoing base station 1500 is applied to the foregoing data flow transmission method shown in FIG. 3, and units in the PEF also correspond to steps in the method.

By using the foregoing base station, flexibility of data flow control by a device on an access network side can be improved, thereby further improving user experience and service efficiency.

It should be noted that, the foregoing TDF, the PEF, and the ERF are located in a network on an access side; and the foregoing policy control node is located in a network on a core side.

In addition, communications systems applied in the foregoing embodiments may be a GSM (Global System for Mobile communications, Global System for Mobile communications), a CDMA (Code Division Multiple Access, Code Division Multiple Access) system, a TDMA (Time Division Multiple Access, Time Division Multiple Access) system, a WCDMA (Wideband Code Division Multiple Access, Wideband Code Division Multiple Access) system, an FDMA (Frequency Division Multiple Address, Frequency Division Multiple Address) system, an OFDMA (Orthogonal Frequency-Division Multiple Access, Orthogonal Frequency-Division Multiple Access) system, a single-carrier FDMA (SC-FDMA) system, a GPRS (General Packet Radio Service, General Packet Radio Service) system, an LTE (Long Term Evolution, Long Term Evolution) system, and other communications systems.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data flow transmission method, comprising:
starting (S101), by a traffic detection function, TDF, in an access network, detection of a service status on a service data flow; and
performing a corresponding operation according to a detection result; or, acquiring a policy rule, and performing a corresponding operation according to a detection result and the policy rule;
**characterized in that**
the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion, and
the performing a corresponding operation according to a detection result comprises: sending, by the TDF, the detection result to a policy control node, so that the policy control node configures a policy rule according to the detection result, and sends the policy rule to the TDF; and performing, by the TDF, a control operation according to the policy rule; or
sending, by the TDF, the detection result to a policy control node, so that the policy control node executes a control policy according to the detection result and a policy rule that is locally configured in the policy control node; and
the acquiring a policy rule, and performing a corresponding operation according to a detection result and the policy rule comprises: acquiring, by the TDF, the policy rule that is locally configured, and performing, by the TDF, the control operation according to the policy rule when the detection result meets the policy rule.

2. The method according to claim 1, wherein the control operation comprises:
executing, by the TDF, a control policy according to the policy rule; or
sending, by the TDF, the policy rule to a base station, so that the base station executes a control policy according to the policy rule.

3. The method according to claim 1 or 2, wherein the sending, by the TDF, the detection result to a policy control node comprises:
sending the detection result to an event reporting function entity, ERF, so that the ERF sends the detection result to the policy control node.

4. The method according to any one of claims 1 to 3, wherein the sending, by the TDF, the detection result to a policy control node comprises: sending the detection result to the policy control node when the detection result meets a preset condition.

5. The method according to any one of claims 1 to 3, wherein the sending the detection result to an event reporting function entity, ERF, so that the ERF sends the detection result to the policy control node comprises:
sending the detection result to the ERF, so that the ERF sends the detection result to the policy control node after receiving a control rule sent by a policy enforcement function entity PEF.

6. The method according to any one of claims 1 to 5, wherein the starting (S101), by a traffic detection function TDF in an access network, detection of a service status on a service data flow comprises:
determining, by the TDF, to start detection on the service data flow according to a local configuration; or
receiving, by the TDF, a start detection rule sent by the policy control node, and starting detection on the service data flow according to the start detection rule.

7. The method according to any one of claims 1 to 5, wherein the starting (S101), by a traffic detection function TDF in an access network, detection of a service status on a service data flow comprises: after a policy enforcement function entity PEF receives a start detection rule sent by the policy control node, receiving, by the TDF, a detection rule sent by the PEF, and starting detection of a service status on the service data flow according to the detection rule.

8. A data flow transmission method, comprising:
sending (S201), by a policy control node, a start detection rule to a traffic detection function, TDF in an
access network instructing the TDF to start detection of a service status on a service data flow according to the start detection rule;
receiving (S202) a detection result sent by the TDF, and configuring a policy rule according to the detection result; and
sending (S203) the policy rule to the TDF, so that the TDF performs a control operation according to the policy rule;
**characterized in that**
the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion.

9. The method according to claim 8, wherein the sending (S201), by a policy control node, a start detection rule to a TDF instructing the TDF to start detection of a service status on a service data flow according to the start detection rule comprises:
sending, by the policy control node, the start detection rule to a PEF, so that the PEF sends a detection rule to the TDF, and the TDF starts detection on the service data flow according to the detection rule; and
the sending (S203) the policy rule to the TDF comprises: sending the policy rule to the PEF, so that the PEF sends the policy rule to the TDF.

10. The method according to claim 8 or 9, wherein the receiving a detection result sent by the TDF comprises:
after an ERF receives the detection result sent by the TDF, receiving the detection result sent by the ERF.

11. An apparatus for traffic detection function, TDF (800), comprising:
a detecting unit (801), configured to start detection of a service status on a service data flow;
a first processing unit (802), configured to: perform a corresponding operation according to a detection result obtained by detection by the detecting unit (801); or, acquire a policy rule, and perform a corresponding operation according to a detection result detected by the detecting unit (801) and the policy rule;
**characterized in that**
the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion, and
the TDF (800) further comprises: a first sending unit (803) and a first receiving unit (804), wherein
the first sending unit (803) is configured to send the detection result to a policy control node, so that the policy control node configures a policy rule according to the detection result, and sends the policy rule to the TDF (800);
the first receiving unit (804) is configured to receive the policy rule sent by the policy control node; and the first processing (802) unit is specifically configured to execute a control operation according to the policy rule received by the first receiving unit (804);
the first sending unit (803) is further configured to send the detection result to the policy control node, so that the policy control node executes a control policy according to the detection result and a policy rule that is locally configured in the policy control node; and
the first processing unit (802) is specifically configured to: acquire a policy rule that is locally configured, and perform the control operation according to the policy rule when the detection result meets the policy rule.

12. A policy control node (1000), comprising:
a second sending unit (1001), configured to send a start detection rule to a traffic detection function, TDF
in an access network instructing the TDF to start detection of a service status on a service data flow according to the start detection rule;
a second receiving unit (1002), configured to receive a detection result sent by the TDF; and
a second processing unit (1003), configured to configure a policy rule according to the detection result received by the second receiving unit (1002); wherein
the second sending unit (1002) is further configured to send the policy rule to the TDF, so that the TDF performs a control operation according to the policy rule
**characterized in that**
the detection result comprises at least one of congestion status information of the base station, physical resource utilization information of the base station, buffer utilization information of the base station, a quantity of user devices that are currently in a connected state or a ratio of a quantity of users to a user capacity of the base station, a currently used congestion control policy of the base station, a packet loss condition of a bearer or a service data flow of the base station caused by congestion.

## Patentansprüche

1. Datenstromübertragungsverfahren, das Folgendes umfasst:
Starten (S101) durch eine Verkehrsdetektionsfunktion, TDF, in einem Zugangsnetz der Detektion eines Dienststatus auf einem Dienstdatenstrom; und
Ausführen einer entsprechenden Operation gemäß einem Detektionsergebnis; oder Erfassen einer Strategieregel und Ausführen einer entsprechenden Operation gemäß einem Detektionsergebnis und der Strategieregel;
**dadurch gekennzeichnet, dass**
das Detektionsergebnis wenigstens eines aus Überlaststatusinformationen der Basisstation, Informationen über die Nutzung physikalischer Betriebsmittel der Basisstation, Informationen über die Puffernutzung der Basisstation, einer Anzahl von Anwendergeräten, die derzeit in einem verbundenen Zustand sind, oder einem Verhältnis einer Anzahl von Anwendern zu einer Anwenderkapazität der Basisstation, einer derzeit verwendeten Überlaststeuerungsstrategie der Basisstation, einem Paketverlustzustand eines Trägers oder einem Dienstdatenstrom der Basisstation, der durch Überlast verursacht ist, umfasst, und
das Ausführen einer entsprechenden Operation gemäß einem Detektionsergebnis Folgendes umfasst: Senden durch die TDF des Detektionsergebnisses zu einem Strategiesteuerungsknoten, so dass der Strategiesteuerungsknoten eine Strategieregel gemäß dem Detektionsergebnis konfiguriert und die Strategieregel zu der TDF sendet; und Ausführen durch die TDF einer Steuerungsoperation gemäß der Strategieregel; oder
Senden durch die TDF des Detektionsergebnisses zu einem Strategiesteuerungsknoten, so dass der Strategiesteuerungsknoten eine Steuerungsstrategie gemäß dem Detektionsergebnis und einer Strategieregel, die in dem Strategiesteuerungsknoten lokal konfiguriert ist, durchführt; und
das Erfassen einer Strategieregel und Ausführen einer entsprechenden Operation gemäß einem Detektionsergebnis und der Strategieregel Folgendes umfasst: Erfassen durch die TDF der Strategieregel, die lokal konfiguriert ist, und Ausführen durch die TDF der Steuerungsoperation gemäß der Strategieregel, wenn das Detektionsergebnis mit der Strategieregel übereinstimmt.

2. Verfahren nach Anspruch 1, wobei die Steuerungsoperation Folgendes umfasst:
Durchführen durch die TDF einer Steuerungsstrategie gemäß der Strategieregel; oder Senden durch die TDF der Strategieregel zu einer Basisstation, so dass die Basisstation eine Steuerungsstrategie gemäß der Strategieregel durchführt.

3. Verfahren nach Anspruch 1 oder 2, wobei das Senden durch die TDF des Detektionsergebnisses zu einem Strategiesteuerungsknoten Folgendes umfasst:
Senden des Detektionsergebnisses zu einer Ereignisberichtsfunktionsentität, ERF, so dass die ERF das Detektionsergebnis zu dem Strategiesteuerungsknoten sendet.

4. Verfahren nach einem der Ansprüche 1 bis 3, wobei das Senden durch die TDF des Detektionsergebnisses zu einem Strategiesteuerungsknoten Folgendes umfasst:
Senden des Detektionsergebnisses zu dem Strategiesteuerungsknoten, wenn das Detektionsergebnis eine voreingestellte Bedingung erfüllt.

5. Verfahren nach einem der Ansprüche 1 bis 3, wobei das Senden des Detektionsergebnisses zu einer Ereignisberichtsfunktionsentität, ERF, so dass die ERF das Detektionsergebnis zu dem Strategiesteuerungsknoten sendet, Folgendes umfasst:
Senden des Detektionsergebnisses zu der ERF, so dass die ERF das Detektionsergebnis zu dem Strategiesteuerungsknoten sendet, nach dem Empfangen einer Steuerungsregel, die durch eine Strategiedurchsetzungsfunktionsentität, PEF, gesendet wird.

6. Verfahren nach einem der Ansprüche 1 bis 5, wobei das Starten (S101) durch eine Verkehrsdetektionsfunktion, TDF, in einem Zugangsnetz der Detektion eines Dienststatus auf einem Dienstdatenstrom Folgendes umfasst:
Bestimmen durch die TDF, die Detektion auf dem Dienstdatenstrom zu starten, gemäß einer lokalen Konfiguration; oder
Empfangen durch die TDF einer Startdetektionsregel, die durch den Strategiesteuerungsknoten gesendet wird, und Starten der Detektion auf dem Dienstdatenstrom gemäß der Startdetektionsregel.

7. Verfahren nach einem der Ansprüche 1 bis 5, wobei das Starten (S101) durch eine Verkehrsdetektionsfunktion, TDF, in einem Zugangsnetz der Detektion eines Dienststatus auf einem Dienstdatenstrom Folgendes umfasst: nachdem eine Strategiedurchsetzungsfunktionsentität, PEF, eine Startdetektionsregel empfangen hat, die durch den Strategiesteuerungsknoten gesendet wird, Empfangen durch die TDF einer Detektionsregel, die durch die PEF gesendet wird, und Starten der Detektion eines Dienststatus auf dem Dienstdatenstrom gemäß der Detektionsregel.

8. Datenstromübertragungsverfahren, das Folgendes umfasst:
Senden (S201) durch einen Strategiesteuerungsknoten einer Startdetektionsregel zu einer Verkehrsdetektionsfunktion, TDF, in einem Zugangsnetz, die die TDF anweist, Detektion eines Dienststatus auf einem Dienstdatenstrom gemäß der Startdetektionsregel zu starten;
Empfangen (S202) eines Detektionsergebnisses, das durch die TDF gesendet wird, und Konfigurieren einer Strategieregel gemäß dem Detektionsergebnis; und
Senden (S203) der Strategieregel zu der TDF, so dass die TDF eine Steuerungsoperation gemäß der Strategieregel ausführt;
**dadurch gekennzeichnet, dass**
das Detektionsergebnis wenigstens eines aus Überlaststatusinformationen der Basisstation, Informationen über die Nutzung physikalischer Betriebsmittel der Basisstation, Informationen über die Puffernutzung der Basisstation, einer Anzahl von Anwendergeräten, die derzeit in einem verbundenen Zustand sind, oder einem Verhältnis einer Anzahl von Anwendern zu einer Anwenderkapazität der Basisstation, einer derzeit verwendeten Überlaststeuerungsstrategie der Basisstation, einem Paketverlustzustand eines Trägers oder einem Dienstdatenstrom der Basisstation, der durch Überlast verursacht ist, umfasst.

9. Verfahren nach Anspruch 8, wobei das Senden (S201) durch einen Strategiesteuerungsknoten einer Startdetektionsregel zu einer TDF, die die TDF anweist, Detektion eines Dienststatus auf einem Dienstdatenstrom gemäß der Startdetektionsregel zu starten, Folgendes umfasst:
Senden durch den Strategiesteuerungsknoten der Startdetektionsregel zu einer PEF, so dass die PEF eine Detektionsregel zu der TDF sendet und die TDF Detektion auf dem Dienstdatenstrom gemäß der Detektionsregel startet; und
das Senden (S203) der Strategieregel zu der TDF Folgendes umfasst: Senden der Strategieregel zu der PEF, so dass die PEF die Strategieregel zu der TDF sendet.

10. Verfahren nach Anspruch 8 oder 9, wobei das Empfangen eines Detektionsergebnisses, das durch die TDF gesendet wird, Folgendes umfasst:
nachdem eine ERF das Detektionsergebnis, das durch die TDF gesendet wird, empfangen hat, Empfangen des Detektionsergebnisses, das durch die ERF gesendet wird.

11. Vorrichtung für eine Verkehrsdetektionsfunktion, TDF, (800), die Folgendes umfasst:
eine Detektionseinheit (801), die konfiguriert ist, Detektion eines Dienststatus auf einem Dienstdatenstrom zu starten;
eine erste Verarbeitungseinheit (802), die konfiguriert ist: eine entsprechende Operation gemäß einem Detektionsergebnis, das durch Detektion durch die Detektionseinheit (801) erhalten wird, auszuführen; oder eine Strategieregel zu erfassen und eine entsprechende Operation gemäß einem Detektionsergebnis, das durch die Detektionseinheit (801) detektiert wird, und der Strategieregel auszuführen;
**dadurch gekennzeichnet, dass**
das Detektionsergebnis wenigstens eines aus Überlaststatusinformationen der Basisstation, Informationen über die Nutzung physikalischer Betriebsmittel der Basisstation, Informationen über die Puffernutzung der Basisstation, einer Anzahl von Anwendergeräten, die derzeit in einem verbundenen Zustand sind, oder einem Verhältnis einer Anzahl von Anwendern zu einer Anwenderkapazität der Basisstation, einer derzeit verwendeten Überlaststeuerungsstrategie der Basisstation, einem Paketverlustzustand eines Trägers oder einem Dienstdatenstrom der Basisstation, der durch Überlast verursacht ist, umfasst, und
die TDF (800) ferner Folgendes umfasst: eine erste Sendeeinheit (803) und eine erste Empfangseinheit (804), wobei
die erste Sendeeinheit (803) konfiguriert ist, das Detektionsergebnis zu einem Strategiesteuerungsknoten zu senden, so dass der Strategiesteuerungsknoten eine Strategieregel gemäß dem Detektionsergebnis konfiguriert und die Strategieregel zu der TDF (800) sendet;
die erste Empfangseinheit (804) konfiguriert ist, die Strategieregel, die durch den Strategiesteuerungsknoten gesendet wird, zu empfangen; und die erste Verarbeitungseinheit (802) insbesondere konfiguriert ist, eine Steuerungsoperation gemäß der Strategieregel, die durch die erste Empfangseinheit (804) empfangen wird, durchzuführen;
die erste Sendeeinheit (803) ferner konfiguriert ist, das Detektionsergebnis zu dem Strategiesteuerungsknoten zu senden, so dass der Strategiesteuerungsknoten eine Steuerungsstrategie gemäß dem Detektionsergebnis und einer Strategieregel, die in dem Strategiesteuerungsknoten lokal konfiguriert ist, durchfuhrt; und
die erste Verarbeitungseinheit (802) insbesondere konfiguriert ist: eine Strategieregel zu erfassen, die lokal konfiguriert ist, und die Steuerungsoperation gemäß der Strategieregel auszuführen, wenn das Detektionsergebnis mit der Strategieregel übereinstimmt.

12. Strategiesteuerungsknoten (1000), der Folgendes umfasst:
eine zweite Sendeeinheit (1001), die konfiguriert ist, eine Startdetektionsregel zu einer Verkehrsdetektionsfunktion, TDF, in einem Zugangsnetz zu senden, die die TDF anweist, Detektion eines Dienststatus, auf einem Dienstdatenstrom gemäß der Startdetektionsregel zu starten;
eine zweite Empfangseinheit (1002), die konfiguriert ist, ein Detektionsergebnis, das durch die TDF gesendet wird, zu empfangen; und
eine zweite Verarbeitungseinheit (1003), die konfiguriert ist, eine Strategieregel gemäß dem Detektionsergebnis, das durch die zweite Empfangseinheit (1002) empfangen wird, zu konfigurieren; wobei
die zweite Sendeeinheit (1002) ferner konfiguriert ist, die Strategieregel zu der TDF zu senden, so dass die TDF eine Steuerungsoperation gemäß der Strategieregel ausführt,
**dadurch gekennzeichnet, dass**
das Detektionsergebnis wenigstens eines aus Überlaststatusinformationen der Basisstation, Informationen über die Nutzung physikalischer Betriebsmittel der Basisstation, Informationen über die Puffernutzung der Basisstation, einer Anzahl von Anwendergeräten, die derzeit in einem verbundenen Zustand sind, oder einem Verhältnis einer Anzahl von Anwendern zu einer Anwenderkapazität der Basisstation, einer derzeit verwendeten Überlaststeuerungsstrategie der Basisstation, einem Paketverlustzustand eines Trägers oder einem Dienstdatenstrom der Basisstation, der durch Überlast verursacht ist, umfasst.

## Revendications

1. Procédé de transmission de flux de données, le procédé comprenant :
le déclenchement (S101), par une fonction de détection de trafic, dite TDF, dans un réseau d'accès, d'une détection d'un état de service sur un flux de données de service ; et
la réalisation d'une opération correspondante en fonction d'un résultat de détection ; ou l'acquisition d'une règle de politique, et la réalisation d'une opération correspondante en fonction d'un résultat de détection et de la règle de politique ;
le procédé étant **caractérisé en ce que**
le résultat de détection comprend au moins un élément dans le groupe constitué par des informations d'état d'encombrement de la station de base, des informations d'utilisation de ressources physiques de la station de base, des informations d'utilisation de tampon de la station de base, une quantité de dispositifs d'utilisateur occupant actuellement un état connecté ou un rapport entre une quantité d'utilisateurs et une capacité d'utilisateurs de la station de base, une politique de gestion d'encombrement actuellement en vigueur de la station de base, une condition de perte de paquets d'un support ou d'un flux de données de service de la station de base due à un encombrement, et
la réalisation d'une opération correspondante en fonction d'un résultat de détection comprend : l'envoi, par la TDF, du résultat de détection à un noeud de gestion de politique, pour que le noeud de gestion de politique configure une règle de politique en fonction du résultat de détection et envoie la règle de politique à la TDF ; et la réalisation, par la TDF, d'une opération de gestion en fonction de la règle de politique ; ou
l'envoi, par la TDF, du résultat de détection à un noeud de gestion de politique, pour que le noeud de gestion de politique exécute une politique de gestion en fonction du résultat de détection et d'une règle de politique qui est configurée localement dans le noeud de gestion de politique ; et
l'acquisition d'une règle de politique, et la réalisation d'une opération correspondante en fonction d'un résultat de détection et de la règle de politique comprennent :
l'acquisition, par la TDF, de la règle de politique qui est configurée localement, et la réalisation, par la TDF, de l'opération de gestion en fonction de la règle de politique si le résultat de détection satisfait à la règle de politique.

2. Procédé selon la revendication 1, dans lequel l'opération de gestion comprend :
l'exécution, par la TDF, d'une politique de gestion en fonction de la règle de politique ; ou
l'envoi, par la TDF, de la règle de politique à une station de base, pour que la station de base exécute une politique de gestion en fonction de la règle de politique.

3. Procédé selon la revendication 1 ou 2, dans lequel l'envoi, par la TDF, du résultat de détection à un noeud de gestion de politique comprend :
l'envoi du résultat de détection à une entité fonction de rapport d'événement, dite ERF, pour que l'ERF envoie le résultat de détection au noeud de gestion de politique.

4. Procédé selon l'une quelconque des revendications 1 à 3, dans lequel l'envoi, par la TDF, du résultat de détection à un noeud de gestion de politique comprend : l'envoi du résultat de détection au noeud de gestion de politique si le résultat de détection satisfait à une condition préétablie.

5. Procédé selon l'une quelconque des revendications 1 à 3, dans lequel l'envoi du résultat de détection à une entité fonction de rapport d'événement, dite ERF, pour que l'ERF envoie le résultat de détection au noeud de gestion de politique comprend :
l'envoi du résultat de détection à l'ERF, pour que l'ERF envoie le résultat de détection au noeud de gestion de politique après avoir reçu une règle de gestion envoyée par une entité fonction d'application de politique, dite PEF.

6. Procédé selon l'une quelconque des revendications 1 à 5, dans lequel le déclenchement (S101), par une fonction de détection de trafic, dite TDF, dans un réseau d'accès, d'une détection d'un état de service sur un flux de données de service comprend :
la détermination, par la TDF, de l'opportunité de déclencher une détection sur le flux de données de service en fonction d'une configuration locale ; ou
la réception, par la TDF, d'une règle de déclenchement de détection envoyée par le noeud de gestion de politique, et le déclenchement d'une détection sur le flux de données de service en fonction de la règle de déclenchement de détection.

7. Procédé selon l'une quelconque des revendications 1 à 5, dans lequel le déclenchement (S101), par une fonction de détection de trafic, dite TDF, dans un réseau d'accès, d'une détection d'un état de service sur un flux de données de service comprend : suite à la réception, par une entité fonction d'application de politique, dite PEF, d'une règle de déclenchement de détection envoyée par le noeud de gestion de politique, la réception, par la TDF, d'une règle de détection envoyée par la PEF, et le déclenchement d'une détection d'un état de service sur le flux de données de service en fonction de la règle de détection.

8. Procédé de transmission de flux de données, le procédé comprenant :
l'envoi (S201), par un noeud de gestion de politique, d'une règle de déclenchement de détection à une fonction de détection de trafic, dite TDF, dans un réseau d'accès donnant pour instruction à la TDF de déclencher une détection d'un état de service sur un flux de données de service en fonction de la règle de déclenchement de détection ;
la réception (S202) d'un résultat de détection envoyé par la TDF, et la configuration d'une règle de politique en fonction du résultat de détection ; et
l'envoi (S203) de la règle de politique à la TDF, pour que la TDF réalise une opération de gestion en fonction de la règle de politique ;
le procédé étant **caractérisé en ce que**
le résultat de détection comprend au moins un élément dans le groupe constitué par des informations d'état d'encombrement de la station de base, des informations d'utilisation de ressources physiques de la station de base, des informations d'utilisation de tampon de la station de base, une quantité de dispositifs d'utilisateur occupant actuellement un état connecté ou un rapport entre une quantité d'utilisateurs et une capacité d'utilisateurs de la station de base, une politique de gestion d'encombrement actuellement en vigueur de la station de base, une condition de perte de paquets d'un support ou d'un flux de données de service de la station de base due à un encombrement.

9. Procédé selon la revendication 8, dans lequel l'envoi (S201), par un noeud de gestion de politique, d'une règle de déclenchement de détection à une TDF donnant pour instruction à la TDF de déclencher une détection d'un état de service sur un flux de données de service en fonction de la règle de déclenchement de détection comprend :
l'envoi, par le noeud de gestion de politique, de la règle de déclenchement de détection à une PEF, pour que la PEF envoie une règle de détection à la TDF, et pour que la TDF déclenche une détection sur le flux de données de service en fonction de la règle de détection ; et
l'envoi (S203) de la règle de politique à la TDF comprend : l'envoi de la règle de politique à la PEF, pour que la PEF envoie la règle de politique à la TDF.

10. Procédé selon la revendication 8 ou 9, dans lequel la réception d'un résultat de détection envoyé par la TDF comprend :
suite à la réception, par une ERF, du résultat de détection envoyé par la TDF, la réception du résultat de détection envoyé par l'ERF.

11. Appareil pour une fonction de détection de trafic, dite TDF (800), l'appareil comprenant :
une unité de détection (801), configurée pour déclencher une détection d'un état de service sur un flux de données de service ;
une première unité de traitement (802), configurée pour : réaliser une opération correspondante en fonction d'un résultat de détection obtenu par détection par l'unité de détection (801) ; ou, acquérir une règle de politique, et réaliser une opération correspondante en fonction d'un résultat de détection détecté par l'unité de détection (801) et de la règle de politique ;
l'appareil étant **caractérisé en ce que**
le résultat de détection comprend au moins un élément dans le groupe constitué par des informations d'état d'encombrement de la station de base, des informations d'utilisation de ressources physiques de la station de base, des informations d'utilisation de tampon de la station de base, une quantité de dispositifs d'utilisateur occupant actuellement un état connecté ou un rapport entre une quantité d'utilisateurs et une capacité d'utilisateurs de la station de base, une politique de gestion d'encombrement actuellement en vigueur de la station de base, une condition de perte de paquets d'un support ou d'un flux de données de service de la station de base due à un encombrement, et
la TDF (800) comprend en outre : une première unité d'envoi (803) et une première unité de réception (804), dans lequel
la première unité d'envoi (803) est configurée pour envoyer le résultat de détection à un noeud de gestion de politique, pour que le noeud de gestion de politique configure une règle de politique en fonction du résultat de détection et envoie la règle de politique à la TDF (800) ;
la première unité de réception (804) est configurée pour recevoir la règle de politique envoyée par le noeud de gestion de politique ; et la première unité de traitement (802) est configurée plus particulièrement pour exécuter une opération de gestion en fonction de la règle de politique reçue par la première unité de réception (804) ;
la première unité d'envoi (803) est configurée en outre pour envoyer le résultat de détection au noeud de gestion de politique, pour que le noeud de gestion de politique exécute une politique de gestion en fonction du résultat de détection et d'une règle de politique qui est configurée localement dans le noeud de gestion de politique ; et
la première unité de traitement (802) est configurée plus particulièrement pour :
acquérir une règle de politique qui est configurée localement, et réaliser l'opération de gestion en fonction de la règle de politique si le résultat de détection satisfait à la règle de politique.

12. Noeud de gestion de politique (1000), comprenant :
une deuxième unité d'envoi (1001), configurée pour envoyer une règle de déclenchement de détection à une fonction de détection de trafic, dite TDF, dans un réseau d'accès donnant pour instruction à la TDF de déclencher une détection d'un état de service sur un flux de données de service en fonction de la règle de déclenchement de détection ;
une deuxième unité de réception (1002), configurée pour recevoir un résultat de détection envoyé par la TDF ; et
une deuxième unité de traitement (1003), configurée pour configurer une règle de politique en fonction du résultat de détection reçu par la deuxième unité de réception (1002) ; dans lequel
la deuxième unité d'envoi (1002) est configurée en outre pour envoyer la règle de politique à la TDF, pour que la TDF réalise une opération de gestion en fonction de la règle de politique ;
le noeud de gestion de politique étant **caractérisé en ce que** le résultat de détection comprend au moins un élément dans le groupe constitué par des informations d'état d'encombrement de la station de base, des informations d'utilisation de ressources physiques de la station de base, des informations d'utilisation de tampon de la station de base, une quantité de dispositifs d'utilisateur occupant actuellement un état connecté ou un rapport entre une quantité d'utilisateurs et une capacité d'utilisateurs de la station de base, une politique de gestion d'encombrement actuellement en vigueur de la station de base, une condition de perte de paquets d'un support ou d'un flux de données de service de la station de base due à un encombrement.
